# EUROPÄISCHE PATENTSCHRIFT

(11) **EP 0 851 132 B1**
(45) Veröffentlichungstag und Bekanntmachung des Hinweises auf die Patenterteilung: **05.01.2000**
(21) Anmeldenummer: 97117898.3
(22) Anmeldetag: 16.10.1997
(51) Int. Cl.: F16C 9/02

(54) **Gussgehäuse mit einer Lageranordnung, insbesondere Kurbel-Zylinder-Block für Hubkolbenmaschinen**
Cast housing with bearing assembly, especially cylinder block and crankcase assembly for reciprocating piston machine
Boîtier moulé comprenant un ensemble de palier, notamment ensemble bloc cylindre-carter de vilebrequin pour machine à pistons alternatifs

(30) Priorität: 16.11.1996 DE 19647465
(43) Veröffentlichungstag der Anmeldung: 01.07.1998
(73) Patentinhaber: Bayerische Motoren Werke Aktiengesellschaft, 80788 München (DE)
(72) Erfinder: Danzer, Maximilian, 85298 Scheyern (DE); Luchner, Clemens, 85598 Baldham (DE)

(56) Entgegenhaltungen:
- WO-A-95/28248
- DE-A- 4 302 303

## Beschreibung

Die Erfindung bezieht sich auf ein mit einer Lageranordnung ausgebildetes Gußgehäuse gemäß der im Oberbegriff des Patentanspruches 1 beschriebenen Bauart.

Ein derartiges, als Kurbel-Zylinder-Block ausgebildetes Gußgehäuse ist beispielsweise aus der WO 95/28248 bekannt, wobei das in Außenwände verbindenden Querwänden fluchtend angeordnete Lagerbohrungen aufweisende Gußgehäuse in Lagerbohrungs-Mittenebenen von den Lagerstühlen bruchgetrennte Lagerdeckeln umfaßt.

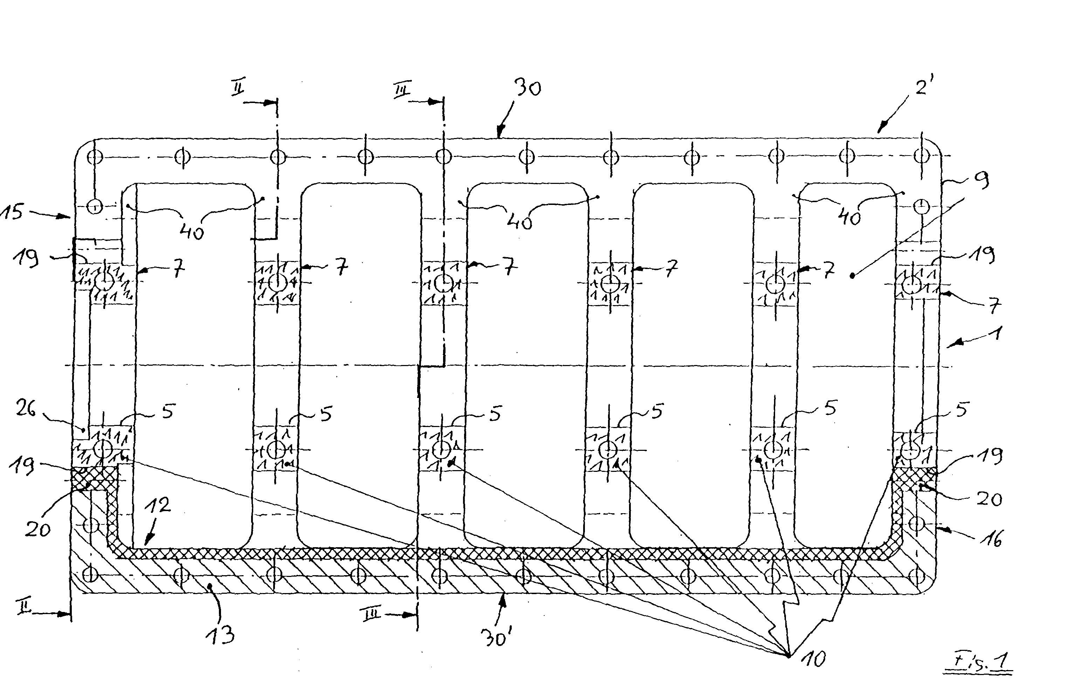

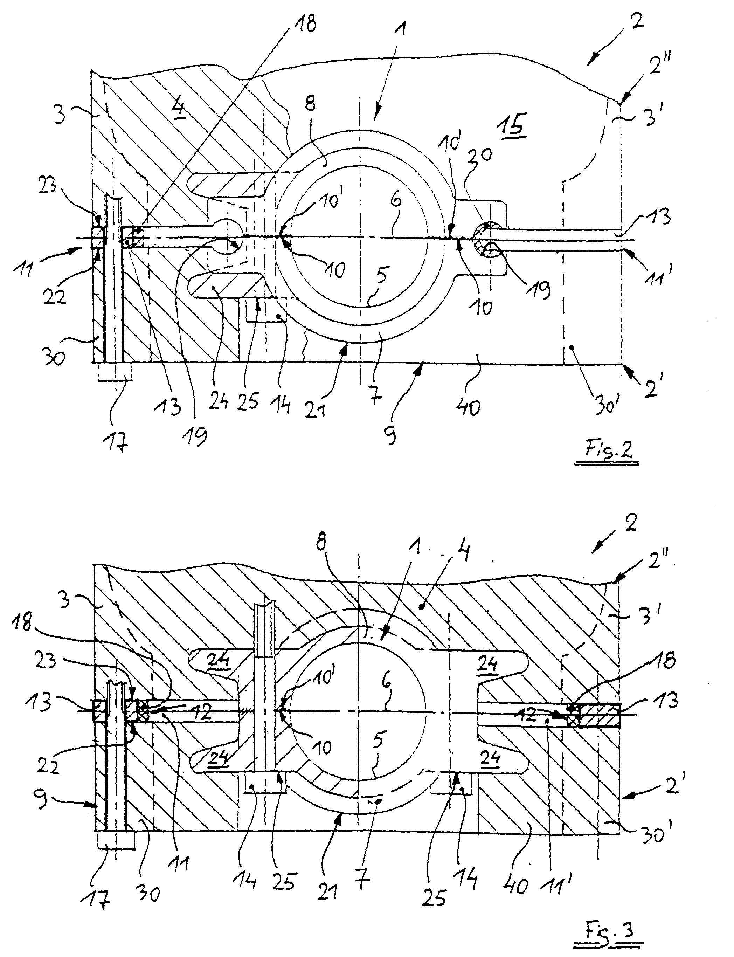

Wie insbesondere aus Figur 2 der o.g. Patentanmeldung hervorgeht, sind lediglich die Lagerstühle in den die Außenwände des Kurbel-Zylinder-Blockes verbindenden Querwänden ausgebildet, wogegen die Lagerdeckel als einstückig angeformte Fortsätze gestaltet sind, die von den Lagerbohrungsmitten über größtmöglich beabstandete Längsstege zu einem Lagerrahmen zusammengefaßt sind. Mit dem in der vorgenannten Patentanmeldung vorgeschlagenen Verfahren des Bruchtrennens dieses Lagerrahmens von den die Lagerstühle bildenden Querwänden ist eine paßgenaue Montage dieses Lagerrahmens an den Lagerstühlen der Querwände wiederholbar.

In der DE-Z Motortechnische Zeitschrift 38 (1977) Heft 7/8 ist auf den Seiten 289 bis 298 ein V-Motor gezeigt und beschrieben, der ein zweigeteiltes Kurbelgehäuse aufweist. Hierbei ist die untere Kurbelgehäusehälfte als ein Lagerrahmen gestaltet mit in Querstegen ausgebildeten Lagerdeckeln, wobei sämtliche Querstege einschließlich der mit Stirnwänden des Kurbelgehäuses fluchtenden Querstege mit zur oberen Kurbelgehäusehälfte fluchtenden Außenwandbereichen einstückig in Verbindung stehen.

Dieser als untere Kurbelgehäusehälfte gestaltete, leiterähnliche Lagerrahmen ist vom übrigen Kurbelgehäuse gesondert angefertigt und wird mit diesem über Verschraubungen unter Einsatz von Passungsmitteln verbunden. Diese zusätzlichen Passungsmittel erfordern einen hohen Fertigungsaufwand, weiter ist die Abdichtung zwischen dem Lagerrahmen und der oberen Kurbelgehäusehälfte aufwendig gestaltet.

Der Erfindung liegt die Aufgabe zugrunde, ein gattungsgemäßes Gußgehäuse derart zu gestalten, daß die für die unterschiedlichen Lagerrahmen bekannten Vorteile kombiniert sind für eine einfachere Ausgestaltung der Abdichtung zwischen dem Lagerrahmen und dem übrigen Gußgehäuse.

Diese Aufgabe ist mit dem Patentanspruch 1 gelöst. Hiernach wird vorgeschlagen, daß das über Abschnitte der Querwände mit diametralen Außenwandbereichen einstückig verbundene, Lagerdeckel aufweisende Gußgehäuse einstückig hergestellt ist, wobei diese Außenwandbereiche und gegebenenfalls angrenzende lagerdeckelseitige Querwandabschnitte vom übrigen Gußgehäuse vor dem Lagerdeckel-Bruchtrennen gesondert getrennt sind, und der die Lagerdeckel umfassende Lagerrahmen als abgetrenntes Gußteil mit dem übrigen Gehäuseteil wieder verbindbar ausgebildet ist über die Bruchtrennflächen der Lagerbohrungen einerseits und über in den außenwandseitigen Trennfugen angeordnete, mit Dichtmitteln ausgerüstete Metallzwischenlagen andererseits.

Mit dem erfindungsgemäßen Lagerrahmen ist mittels der lagernahen Bruchtrennflächen einerseits eine paßgenaue Montage des gesamten Lagerrahmens am übrigen Gußgehäuse erzielt und andererseits über die Ausbildung der Lagerdeckel in mit Außenwandbereichen verbundenen Querwänden eine weitere aussteifende Verbindung zum übrigen Gußgehäuse erzielt, wobei eine in den Trennfugen zwischen dem übrigen Gußgehäuse und dem Lagerrahmen kalibriert ausgebildete Metallzwischenlage als Träger eines Dichtmittels dient. Mit der erfindungsgemäßen Zwischenlage als Träger eines Dichtmittels können vorzugsweise Gummi- bzw. elastomere Dichtmittel zum Einsatz kommen, die die jeweilige Trennfuge im vorgespannten Zustand vollständig ausfüllen.

In Ausgestaltung der Erfindung ist der Lagerrahmen als ein von einem Kurbel-Zylinder-Block mit in den Blockstirnseiten angeordneten Lagerbohrungen abgetrenntes Gehäuseteil gestaltet, wobei die Bruchtrennflächen in den stirnseitigen Lagerrahmen-Streben des gehäuseumfänglich geschlossenen Lagerrahmens mit den korrespondierenden Bruchtrennflächen in den Stirnseiten des Kurbel-Zylinder-Blockes in gefügtem Zustand als öldichte Verbindungen dienen. Mit dieser Maßnahme erübrigen sich zusätzliche Dichtanordnungen.

In weiterer Ausgestaltung des über korrespondierende Bruchtrennflächen von Lagerdeckeln und Lagerstühlen am übrigen Gehäuseteil paßgenau lagegesicherten und mittels einer Lagerverschraubung fixierten Lagerrahmens wird weiter vorgeschlagen, daß dieser zur öldichten Anordnung am Kurbel-Zylinder-Block mit diesem über seine stirn- und längsseitigen Außenwandbereiche sowie die Metallzwischenlagen durchsetzenden Schraubbolzen in Verbindung steht, wobei die Metallzwischenlagen mit die Trennfugen lagerseitig dichtfüllenden Gummi- bzw. Elastomer-Körpern ausgerüstet sind, die in anteilig im Kurbel-Zylinder-Block und Lagerrahmen den Bruchtrennflächen der stirnseitigen Lagerbohrungen benachbart ausgebildeten Ausnehmungen gepreßt angeordnete Endabschnitte aufweisen.

Diese Ausgestaltung ergibt insbesondere bei der Montage eine sicher zu erzielende Abdichtung sowie eine einfache Lösbarkeit. Denkbar ist ferner die Metallzwischenlagen mittels Flüssigdichtungen anzuordnen.
Eine bezüglich Gewicht und Kosten besonders vorteilhafte Ausgestaltung des Gußgehäuses ist in weiterer Ausgestaltung dadurch erreicht, daß in einem zunächst einstückig aus einem Leichtwerkstoff, insbesondere Leichtmetall gefertigten Kurbel-Zylinder-Block einstückige aus einer Schwermetall- bzw. Eisen-Verbindung gestaltete Lagerringe eingegossen sind, und daß den gegebenenfalls zunächst vorgegossenen Trennfugen zwischen Block und abschnittsweise gesondert ausgeformten Lagerrahmen vor oder nach dem Bruchtrennen der Lagerringe zur Abtrennung des Lagerrahmens spanabhebend bearbeitete Anlageflächen für die Metallzwischenlagen und für die mit diesen verbundenen Dichtmitteln zugeordnet sind. Je nach eingesetztem Dichtmittel können die Trennfugen auch mittels Fertiggießen ausgebildet sein.

Diese vorbeschriebene Ausgestaltung bietet den erheblichen Vorteil, das zunächst einstückige Gußgehäuse im Druckguß herstellen zu können, wobei die Trennfuge vorgegossen wird und der Lagerrahmen sich dabei als abschnittsweise gesondert ausgeformtes Teil ergibt. Weiter ergibt diese Ausgestaltung mit den für die Einhaltung eines geringen Lagerspieles eingegossenen Lagerringen aus einem anderen Grundwerkstoff mit z.B. durch Glaseinlagen oder einer anderen Vorbehandlung vorbereiteten Bruchstellen ein einwandfreies Bruchtrennen und erlaubt ferner mit geringem Aufwand an spanabhebender Bearbeitung einwandfreie Anlageflächen für die Metallzwischenlagen. Insgesamt ergibt sich somit eine kostengünstige Ausgestaltung eines insbesondere aus einer Alu-Legierung im Druckgußverfahren gebildeten Kurbel-Zylinder-Blockes, wobei die eingegossenen Lagerringe als Sinter- oder Gußformteile oder als MMC-Preforms oder als vorinfiltrierte MMC-Formteile gestaltet sind. Diese MMC-Formteile sind eigensteife Fasenformteile, die insbesondere in Verbindung mit dem Druckgußverfahren zur weiteren Gewichtsreduzierung eines Gußgehäuses beitragen.

In weiterer Ausgestaltung der zum Eingießen vorgesehenen Lagerringe weisen diese beiderseits der für das Bruchtrennen vorgesehenen Lagerbohrungs-Mittenebene angeordnete Verankerungs-Fortsätze auf, wobei die zunächst einstückigen Lagerringe mit Durchgangsbohrungen und rechtwinkelig zugeordneten Auflageflächen für Lagerschrauben vorbereitet sind. Diese Durchgangsbohrungen und Auflageflächen können vorteilhaft zur Anordnung dieser Lagerringe in der jeweiligen Gußform dienen.

Mit der Erfindung eröffnet sich schließlich die Möglichkeit, jedes mit einer Lageranordnung ausgebildete Gußgehäuse derart zu gestalten, daß die jeweilige Lageranordnung in einer aus einem Schwermetall wie beispielsweise Grauguß gestalteten Querwand angeordnet ist, die mit einem aus Gewichtsgründen aus Leichtmetall oder auch aus Kunststoff gebildeten Gehäuse in einem Gußverbund ausgebildet ist, wobei der jeweilige Lagerrahmen nach einer vorausgehenden,z.B. vorzugsweise kalibriert spanabhebenden Abtrennung in Gehäusebereiche schließlich durch Bruchtrennen gebildet ist.

Die Erfindung ist anhand eines in der Zeichnung schematisch dargestellten Ausführungsbeispiels beschrieben. Es zeigen
- Figur 1: einen erfindungsgemäßen Lagerrahmen,
- Figur 2: einen mit einer Stirnansicht kombinierten Halbschnitt gemäß der Linie 11-11,
- Figur 3: einen Schnitt gemäß der Linie III-III in Figur 1 einer Querwand mit einem eingegossenen Lagernng.

Ein insbesondere aus den Figuren 2 und 3 abschnittsweise mit Lageranordnungen 1 erkennbares, vorzugsweise als ein Kurbel-Zylinder-Block gestaltetes Gußgehäuse 2 für eine nicht näher dargestellte Hubkolben-Brennkraftmaschine weist in den die Außenwände 3, 3' des Gußgehäuses 2 verbindenden Querwänden 4 fluchtend angeordnete Lagerbohrungen 5 auf mit in den Lagerbohrungs-Mittenebenen 6 von den Lagerstühlen 8 bruchgetrennten Lagerdeckeln 7.

Erfindungsgemäß ist das über Abschnitte 40 der Querwände 4 mit diametralen Außenwandbereichen 30, 30' einstückig verbundene, Lagerdeckel 7 aufweisende Gußgehäuse 2 einstückig hergestellt, wobei anschließend diese Außenwandbereiche 30, 30' und gegebenenfalls die angrenzenden lagerdeckelseitigen Querwandabschnitte 40 vom übrigen Gußgehäuse 2 vor dem Lagerdeckel-Bruchtrennen gesondert getrennt sind, und der auf diese Weise gebildete, die Lagerdeckel 7 umfassende Lagerrahmen 9 als abgetrenntes Gehäuseteil 2' mit dem übrigen Gehäuseteil 2" wiederverbindbar ausgebildet ist über die Bruchtrennflächen 10, 10' der Lagerbohrungen 5 einerseits und über in den außenwandseitigen Trennfugen 11, 11' angeordnete, mit Dichtmitteln 12 ausgerüstete Metallzwischenlagen 13 andererseits.

Mit dieser erfindungsgemäßen Ausgestaltung ist der Lagerrahmen 9 über korrespondierende Bruchtrennflächen 10, 10' von Lagerdeckeln 7 und Lagerstühlen 8 am übrigen Gehäuseteil 2" des Kurbel-Zylinder-Blockes 2 paßgenau lagegesichert und mittels einer Lagerverschraubung 14 fixiert.

Wie aus Figur 1 ersichtlich, ist der Lagerrahmen 9 ein von einem Kurbel-Zylinder-Block 2 mit in den Blockstirnseiten 15, 16 angeordneten Lagerbohrungen 5 vorzugsweise abgetrenntes Gehäuseteil 2', wobei die Bruchtrennflächen 10, 10' in den stimseitigen Lagerrahmenstreben des umfänglich geschlossenen Lagerrahmens 9 mit den korrespondierenden Bruchflächen in den Stirnseiten 15, 16 des Gehäuseteiles 2" des Kurbel-Zylinder-Blockes 2 im gefügten Zustand als öldichte Verbindungen dienen.

Zur weiteren öldichten Anordnung des Lagerrahmens 9 am Gehäuseteil 2" des Kurbel-Zylinder-Blockes 2 steht der Lagerrahmen 9 mit dem Gehäuseteil 2" über seine stirn- und längsseitigen Außenwandbereiche 30, 30' und Querwandabschnitte 40 sowie die Metallzwischenlagen 13 durchsetzende Schraubbolzen 17 in Verbindung, wobei die Metallzwischenlagen 13 mit die Trennfugen 11, 11' lagerseitig dichtfüllenden Gummi- bzw. Elastomer-Körpern 18 ausgerüstet sind, die in anteilig im Gehäuseteil 2" des Kurbel-Zylinder-Blockes 2 und im Lagerrahmen 9 den Bruchtrennflächen 10, 10' der stirnseitigen Lagerbohrungen 5 benachbart ausgebildeten Ausnehmungen 19 gepreßt angeordnete Endabschnitte 20 aufweisen. Vorzugsweise sind diese Ausnehmungen 19 als Bohrungen gestaltet und werden vor der spanabhebenden Trennung des Gußgehäuses 2 in die Gehäuseteile 2' und 2" angeordnet.

Mit der im vorbeschriebenen Umfang dargestellten Erfindung ist ein Gußgehäuse 2 mit einem Lagerrahmen 9 erzielt, der einerseits über korrespondierende Bruchtrennflächen 10, 10' am Gehäuseteil 2" des Kurbel-Zylinder-Blockes 2 paßgenau anordbar ist und der ferner zur Steigerung der Festigkeit der Lageranordnungen 1 mit den Außenwänden 3, 3' des Gußgehäuses 2 bzw. des Kurbel-Zylinder-Blockes 2 unter Zwischenlage von Metallzwischenlagern 13 verschraubbar ist, wobei diese Metallzwischenlagen 13 als Träger von die Trennfugen 11, 11' abdichtenden Dichtmitteln dienen. Erreicht ist damit in vorteilhafter Weise ein hochbelastbarer Verband von Lagerrahmen und übrigem Kurbel-Zylinder-Block 2 mit einer bei der Montage dieser Gehäusegestaltung in der Handhabung vorteilhaft einfachen Dichtungsanordnung.

Weiter kann mit der Erfindung ein Gußgehäuse 2 bzw. ein Kurbel-Zylinder-Block 2 hinsichtlich Gewicht und Fertigungsaufwand vorteilhaft dahingehend optimiert werden, daß in einem zunächst einstückig aus einem Leichtwerkstoff, vorzugsweise Leichtmetall, gefertigten Kurbel-Zylinder-Block 2 einstückige, aus einer Schwermetallverbindung wie beispielsweise Grauguß gestaltete Lagerringe 21 eingegossen sind, und daß den gegebenenfalls zunächst vorgegossenen Trennfugen 11, 11' zwischen Gehäuseteil 2" und dem zumindest abschnittsweise gesondert ausgeformten Lagerrahmen 9 nach dem Bruchtrennen der Lagerringe 21 zur Abtrennung des Lagerrahmens 9 spanabhebend bearbeitete Anlageflächen 22, 23 für die Metallzwischenlagen 13 und die mit diesen verbundenen Dichtmitteln 12 bzw. 18 zugeordnet sind. In einer darauf bezogenen, konkreten Ausgestaltung ist der zunächst einstückig und über vorgegossene Trennfugen 11, 11' mit einem abschnittsweise gesondert ausgeformten Lagerrahmen 9 gefertigte Kurbel-Zylinder-Block 2 aus einer Alu-Legierung im Druckgußverfahren gebildet, wobei die eingegossenen Lagerringe 21 als Sinter- oder Gußformteile oder als eigensteife Faserformteile nach der Art von MMC-Preforms oder als vorinfiltrierte MMC-Formteile gestaltet sind.

Zur Erzielung weiterer formsteifer Lageranordnungen in den Querwänden 4 bzw. Querwandabschnitten 40 weisen die zum Eingießen vorgesehenen Lagerringe 21 jeweils beiderseits der für das Bruchtrennen vorgesehenen Lagerbohrungs-Mittenebenen 6 angeordnete Verankerungs-Fortsätze 24 auf. Zur lagesicheren Anordnung der Lagerringe 21 in der jeweiligen Gußform sind diese zunächst einstückigen Lagerringe 21 weiter mit Durchgangsbohrungen und rechtwinklig zugeordneten Auflageflächen 25 für Lagerschrauben 14 vorbereitet, wobei diese Maßnahmen zur Fixierung in der jeweiligen Gießform dienen.

Wie weiter aus der Figur 1 ersichtlich, kann einer stirnseitigen Lagerbohrung 5 eine koaxiale Ausnehmung 26 zur Aufnahme eines nicht dargestellten Wellendichtringes zugeordnet sein , der in der Ausnehmung 26 über seinen Außendurchmesser vorteilhaft dicht angeordnet ist.

Die Erfindung kann auch auf andere Gußgehäuse Anwendung finden, wobei z.B. in einem aus einem Leichtwerkstoff gebildeten Getriebegehäuse aus einer Schwermetallverbindung gestaltete Querwände zur Anordnung von Lagerbohrungen eingegossen sind, wobei ferner die Gehäusewände und angrenzende Querwandabschnitte mittels vorbestimmt angeordneter mechanischer Trennfugen vorgetrennt und die Querwände schließlich durch hälftiges Bruchtrennen im Bereich der Lagerbohrungen geteilt sind zum paßgenauen, wiederholbaren Zusammenbau. Diese Trennfugen wie auch die Trennfugen 11,11' können spanabhebend auf ein der jeweiligen Höhe der jeweiligen Zwischenlage (13) entsprechend angepaßtes Fertigmaß erzeugt sein. Dies ist schließlich auch durch den Einsatz von Glaskernen beim Gießen möglich .

## Patentansprüche

1. Gußgehäuse mit einer Lageranordnung, insbesondere Kurbel-Zylinder-Block für Hubkolbenmaschinen,
- wobei das in Außenwände (3, 3') verbindenden Querwänden (4) fluchtend angeordnete Lagerbohrungen (5) aufweisende Gußgehäuse (2) in Lagerbohrungs-Mittenebenen (6) von den Lagerstühlen (8) bruchgetrennte Lagerdeckeln (7) umfaßt,
dadurch gekennzeichnet,
- daß das über Abschnitte (40) der Querwände (4) mit diametralen Außenwandbereichen (30, 30') einstückig verbundene, Lagerdeckel (7) aufweisende Gußgehäuse (2) einstückig hergestellt ist, wobei
- diese Außenwandbereiche (30, 30') und gegebenenfalls angrenzende lagerdeckelseitige Querwandabschnitte (40) vom übrigen Gußgehäuse (2") vor dem Lagerdeckel-Bruchtrennen gesondert getrennt sind und
- der die Lagerdeckel (7) umfassende Lagerrahmen (9) als abgetrenntes Gehäuseteil (2') mit dem übrigen Gehäuseteil (2") wiederverbindbar ausgebildet ist über die Bruchtrennflächen (10, 10') der Lagerbohrungen (5) einerseits und über in den außenwandseitigen Trennfugen (11, 11') angeordnete, mit Dichtmitteln (12) ausgerüstete Metallzwischenlagen (13) andererseits.

2. Gußgehäuse nach Anspruch 1, dadurch gekennzeichnet,
- daß der Lagerrahmen (9) ein von einem Kurbel-Zylinder-Block (2) mit in den Blockstirnseiten (15, 16) angeordneten Lagerbohrungen (5) abgetrenntes Gehäuseteil (2') ist, wobei
- die Bruchtrennflächen (10) in den stirnseitigen Lagerrahmen-Streben (40) des umfänglich geschlossenen Lagerrahmens (9) mit den korrespondierenden Bruchtrennflächen (10') in den Stirnseiten (15, 16) des Gehäuseteiles (2") des Kurbel-Zylinder-Blockes (2) im gefügten Zustand als öldichte Verbindungen dienen.

3. Gußgehäuse nach Anspruch 1 und 2, dadurch gekennzeichnet, daß der Lagerrahmen (9) über korrespondierende Bruchtrennflächen (10, 10') von Lagerdeckeln (7) und Lagerstühlen (8) am übrigen Gehäuseteil (2") des Kurbel-Zylinder-Blockes (2) paßgenau lagegesichert und mittels einer Lagerverschraubung (14) fixiert ist.

4. Gußgehäuse nach den Ansprüchen 1 bis 3, dadurch gekennzeichnet,
- daß der Lagerrahmen (9) zur weiteren öldichten Anordnung am Gehäuseteil (2") des Kurbel-Zylinder-Blockes (2) mit diesem über seine stirn- und längsseitigen Außenwandbereiche (40, 30, 30') sowie die Metallzwischenlagen (13) durchsetzenden Schraubbolzen (17) in Verbindung steht, wobei
- die Metallzwischenlagen (13) mit die Trennfugen (11, 11') lagerseitig dichtfüllenden Gummi- bzw. Elastomer-Körpern (18) ausgerüstet sind, die
- in anteilig im Gehäuseteil (2") des Kurbel-Zylinder-Blockes (2) und im Lagerrahmen (9) den Bruchtrennflächen (10, 10') der stirnseitigen Lagerbohrungen (5) benachbart ausgebildeten Ausnehmungen (19) gepreßt angeordnete Endabschnitte (20) aufweisen.

5. Gußgehäuse nach den Ansprüchen 1 bis 4, dadurch gekennzeichnet,
- daß in einem zunächst einstückig aus einem Leichtwerkstoff, z.B. Leichtmetall, Kunststoff, gefertigten Kurbel-Zylinder-Block (2) einstückige, aus einer Schwermetallverbindung gestaltete Lagerringe (21) eingegossen sind, und
- daß den gegebenenfalls zunächst vorgegossenen Trennfugen (11, 11') zwischen Gehäuseteil (2") und dem abschnittsweise gesondert ausgeformten Lagerrahmen (9) nach dem Bruchtrennen der Lagerringe (21) zur Abtrennung des Lagerrahmens (9) spanabhebend bearbeitete Anlageflächen (22, 23) für die Metallzwischenlagen (13) und die mit diesen verbundenen Dichtmitteln (12, 18, 20) zugeordnet sind.

6. Gußgehäuse nach Anspruch 5, dadurch gekennzeichnet,
- daß der zunächst einstückig und über vorgegossene Trennfugen (11, 11') mit einem abschnittsweise gesondert ausgeformten Lagerrahmen (9) gefertigte Kurbel-Zylinder-Block (2) aus einer Aluminium-Legierung im Druckgußverfahren gebildet ist, wobei
- die eingegossenen Lagerringe (21) als Sinter- oder Gußformteile oder als MMC-Preforms oder als vorinfiltrierte MMC-Formteile gestaltet sind.

7. Gußgehäuse nach den Ansprüchen 5 oder 6, dadurch gekennzeichnet,
- daß die zum Eingießen vorgesehenen Lagerringe (21) jeweils beiderseits der für das Bruchtrennen vorgesehenen Lagerbohrungs-Mittenebene (6) angeordnete Verankerungs-Fortsätze (24) aufweisen, und ferner
- die einstückigen Lagerringe (21) mit Durchgangsbohrungen und rechtwinkelig zugeordneten Auflageflächen (25) für Lagerschrauben (14) vorbereitet sind.

8. Gußgehäuse nach den Ansprüchen 1 bis 7, dadurch gekennzeichnet, daß einer stirnseitigen Lagerbohrung (5) eine koaxiale Ausnehmung (26) zur Aufnahme eines Wellendichtringes zugeordnet ist.

9. Gußgehäuse nach Anspruch 1, dadurch gekennzeichnet,
- daß in einem aus einem Leichtwerkstoff gebildeten Getriebegehäuse aus einer Schwermetallverbindung gestaltete Querwände zur Anordnung von Lagerbohrungen eingegossen sind, wobei
- die Gehäusewände und angrenzende Querwandabschnitte mittels vorbestimmt angeordneter mechanischer Trennfugen vorgetrennt und die Querwände schließlich durch hälftiges Bruchtrennen im Bereich der Lagerbohrungen geteilt sind zum paßgenauen, wiederholbaren Zusammenbau.

10. Gußgehäuse nach einem der Ansprüche 1 - 9, dadurch gekennzeichnet, daß die Trennfugen (11, 11') zwischen Gehäuseteil (2") und dem Lagerrahmen (9) spanabhebend auf ein der jeweiligen Höhe der Zwischenlagen (13) entsprechendes Fertigmaß erzeugt sind.

11. Gußgehäuse nach einem der Ansprüche 1 - 9, dadurch gekennzeichnet, daß die Trennfugen (11, 11') zwischen Gehäuseteil (2") und dem Lagerrahmen (9) beim Gießen mittels auf die Zwischenlagen (13) maßlich abgestellte Glaskerne erzeugt sind.

## Claims

1. A cast-metal casing comprising a bearing arrangement, especially a crank-cylinder block for reciprocating engines,
- wherein the cast-metal casing (2), which has bearing bores (5) disposed flush in transverse walls (4) connecting external walls (3, 3'), comprises bearing covers (7) fracture-separated from the bearing blocks (8) in bearing-bore centre planes (6),
characterised in that
- the cast-metal casing (2) comprising a bearing cover (7) and integrally connected via portions (40) of the transverse walls (4) to diametral outer wall regions (30, 30') is produced in one piece, wherein
- the said outer wall regions (30, 30') and any adjoining transverse wall portions (40) on the same side as the bearing cover are separately parted from the rest of the cast-metal casing (2") before the bearing cover is fracture-separated and
- the bearing frame (9) comprising the bearing cover (7) is in the form of a separated casing part (2') which can be re-connected to the remaining part (2") of the casing, on the one hand via the fracture-separated surfaces (10, 10') of the bearing bores (5) and on the other hand via intermediate metal layers (13) equipped with sealing means (12) and disposed in parting lines (11, 11') on the outer-wall side.

2. A cast-metal casing according to claim 1, characterised in that
- the bearing frame (9) is a casing part (2') separated from a crank-cylinder block (2) and with bearing bores (5) disposed in the end faces (15, 16) of the block, wherein
- the fracture-separated surfaces (10) in the struts (40) in the end face of the peripherally closed bearing frame (9), when fitted together, serve as oil-tight connections in co-operation with the corresponding fracture-separated surfaces (10') in the end faces (15, 16) of the casing part (2") of the crank-cylinder block (2).

3. A cast-metal casing according to claims 1 and 2, characterised in that the bearing frame (9) is secured in position with an accurate fit to the remaining part (2") of the casing of the crank-cylinder block (2) via corresponding fracture-separated surfaces (10, 10') of bearing covers (7) and bearing blocks (8) and is secured by bolts (14).

4. A cast-metal casing according to claims 1 to 3, characterised in that
- to obtain an additional oil-tight arrangement on the casing part (2") of the crank-cylinder block (2), the bearing frame (9) is connected to the said block via its end-face and longitudinal outer wall regions (40, 30, 30') and via threaded bolts (17) extending through the intermediate metal layers (13), wherein
- the intermediate metal layers (13) are provided with rubber or elastomer substances (18) which fill and seal the parting lines (11, 11') on the bearing side and which
- have end portions (20) pressed into recesses (19) which adjoin the fracture-separated surfaces (10, 10') of the end-face bearing bores (5) and are formed proportionately in the bearing frame (9) and in the casing part (2") of the crank-cylinder block (2).

5. A cast-metal casing according to claims 1 to 4, characterised in that
- one-piece ring bearings (21) made of a heavy-metal compound are integrally cast in a crank-cylinder block (2) originally produced in one piece from a light material such as light metal or plastics material, and
- after the ring bearings (21) have been fracture-separated, machined abutment surfaces (22, 23) for the intermediate metal layers (13) and the sealing means (12, 18, 20) connected thereto are associated, for the purpose of separating the bearing frame (9), with the optionally initially precast parting lines (11, 11') between the casing part (2") and the bearing frame (9), which is separately moulded in sections.

6. A cast-metal casing according to claim 5, characterised in that
- the piston-cylinder block (2) initially made in one piece, via precast parting lines (11, 11'), with a bearing frame (9) moulded separately in sections is made from an aluminium alloy by die-casting, wherein
- the integrally cast ring bearings (21) are sintered or cast shaped parts or MMC preforms or pre-infiltrated MMC shaped parts.

7. A cast-metal casing according to claims 5 or 6, characterised in that
- the ring bearings (21) provided for integrally casting have anchoring projections (24) disposed on each side of the bearing-bore centre plane (6) provided for fracture separation, and
- the one-piece ring bearings (21) are previously formed with through bores and abutment surfaces (25) at right angles thereto or bearing bolts (14).

8. A cast-metal casing according to claims 1 to 7, characterised in that a coaxial recess (26) for receiving a rotary shaft seal is associated with an end-face bearing bore (5).

9. A cast-metal casing according to claim 1, characterised in that
- transverse walls made of a heavy-metal compound for receiving bearing bores are integrally cast in a gear case made of light material, wherein
- the casing walls and adjoining transverse-wall portions are previously separated along mechanical parting lines at predetermined positions and finally the transverse walls are divided by fracturing in half in the neighbourhood of the bearing bores for the purpose of repeatable assembly with accurate fit.

10. A cast-metal casing according to any of claims 1 to 9, characterised in that the parting lines (11, 11') between the casing part (2") and the bearing frame (9) are produced by machining to a finished size corresponding to the respective height of the intermediate layers (13).

11. A cast-metal casing according to any of claims 1 to 9, characterised in that the parting lines (11, 11') between the casing part (2") and the bearing frame (9) are produced during casting by means of glass cores adapted to the dimensions of the intermediate layers (13).

## Revendications

1. Boîtier en fonte comportant un dispositif de palier, notamment un bloc vilebrequin/cylindre pour un moteur à pistons alternatifs,
- le boîtier de fonte (2) comportant des perçages de palier (5) alignés, réalisés dans les parois transversales (4) reliant les parois extérieures (3, 3'), comprend des couvercles de palier (7) séparés par rupture par rapport aux sièges de palier (8), la séparation se faisant dans le plan médian (6) des perçages de palier,
caractérisé en ce que
- le boîtier de fonte (2) avec le couvercle (7) relié en une seule pièce, par des segments (40) de cloisons (4), aux zones de parois extérieures (30, 30') diamétrales, est réalisé en une seule pièce,
- les zones de parois extérieures (30, 30'), et le cas échéant les segments de parois transversales (40) adjacentes du côté des couvercles de palier, sont séparés de la partie restante du boîtier (2") avant la séparation par rupture du chapeau de palier, et
- le châssis de palier (9) comprenant les chapeaux de palier (7) est réalisé comme partie de boîtier (2') séparable qui peut de nouveau être réunie à l'autre partie de boîtier (2") par, d'une part, les surfaces de séparation de rupture (10, 10') des perçages de palier (5), et, par, d'autre part, des couches intermédiaires métalliques (13) équipées de moyens d'étanchéité (12) prévus dans les joints de séparation (11, 11') du côté de la paroi extérieure.

2. Boîtier en fonte selon la revendication 1,
caractérisé en ce que
- le châssis de palier (9) est une partie de boîtier (2') séparée d'un bloc vilebrequin/cylindre (2), avec des perçages de palier (5) prévus dans les faces frontales (15, 16) du bloc, et
- les surfaces de séparation de rupture (10), dans les entretoises du châssis de palier (40), du côté frontal, du châssis (9) à périphérie fermée, constituent, à l'état assemblé, des liaisons étanches à l'huile avec les surfaces de séparation de rupture (10') correspondantes des faces frontales (15, 16) de la partie de boîtier (2") du bloc (2) à l'état assemblé.

3. Boîtier de fonte selon la revendication 1 ou 2,
caractérisé en ce que
le châssis de palier (9) est fixé, de manière ajustée, par des surfaces de séparation de rupture correspondantes (10, 10') des chapeaux de palier (7) et des sièges de palier (8), sur l'autre partie de boîtier (2") du bloc (2), et se solidarise avec des vis (14).

4. Boîtier de fonte selon les revendications 1 à 3,
caractérisé en ce que
- le châssis de palier (9) est relié, pour le montage étanche à l'huile sur la partie de boîtier (2") du bloc (2), par des zones de parois extérieures (40, 30, 30'), du côté frontal et du côté longitudinal, ainsi qu'avec des vis (17) traversant les couches métalliques intermédiaires (13),
- les couches métalliques intermédiaires (13) sont munies de corps en élastomère ou en caoutchouc (18) qui remplissent de manière étanche les joints (11, 11') du côté du palier,
- ces couches comportent des segments d'extrémité (20) pressés dans des cavités (19) réalisées au voisinage des perçages de palier (5), du côté frontal, faisant corps avec la partie de boîtier (2") du bloc (2), et dans le châssis de palier (9) pour les surfaces de séparation de rupture (10, 10') des perçages à palier (5), du côté frontal.

5. Boîtier de fonte selon les revendications 1 à 4,
caractérisé en ce que
- dans un bloc vilebrequin/cylindre (2) réalisé tout d'abord en une seule pièce en matériau léger, par exemple un métal léger, ou une matière plastique, on intègre par coulée, en une seule pièce, des bagues de palier (21) en métal lourd, et
- aux joints de séparation (11, 11') pré-coulés le cas échéant, entre la partie de boîtier (2") et le châssis de palier (9) formé par segments, de manière particulière, après la séparation par rupture des bagues de palier (21), pour séparer le châssis de palier (9), on associe des surfaces d'appui (22, 23) usinées avec enlèvement de copeaux pour les couches intermédiaires métalliques (13) et les moyens d'étanchéité (12, 18, 20) reliés à ces couches.

6. Boîtier de fonte selon la revendication 5,
caractérisé en ce que
- le bloc vilebrequin/cylindre (2), tout d'abord réalisé en une seule pièce et avec des joints de séparation pré-coulés (11, 11') est un châssis de palier (9) formé de manière séparée par segments, le bloc étant obtenu par un procédé de fonte sous pression en un alliage d'aluminium,
- les bagues de palier (21) intégrées à la coulée étant réalisés comme pièces de fonte ou comme pièces frittées ou encore comme préformes MMC ou comme préformes MMC pré-infiltrées.

7. Boîtier de fonte selon l'une des revendications 5 ou 6,
caractérisé en ce que
- les bagues de palier (21), destinées à être intégrées à la coulée, comportent chaque fois, de part et d'autre du plan médian (6), des perçages de palier prévus pour la séparation par rupture, des prolongements d'accrochage (24), et en outre
- les bagues de palier (21), réalisées en une seule pièce avec les perçages traversants et les surfaces d'appui (25) prévues à l'équerre, sont préparées pour des vis de palier (14).

8. Boîtier de fonte selon l'une des revendications 1 à 7,
caractérisé en ce qu'
une cavité coaxiale (26) pour recevoir un joint d'étanchéité ondulé, est associée à un perçage de palier (5), du côté frontal.

9. Boîtier de fonte selon la revendication 1,
caractérisé en ce que
- dans une boîte de vitesses en un matériau léger, on intègre, à la coulée, des cloisons pour recevoir les perçages de palier, ces cloisons étant en métal lourd, et
- les parois du boîtier et les cloisons adjacentes sont séparées préalablement par des joints de séparation mécaniques situés de manière prédéterminée, et
- les cloisons sont divisées finalement par séparation par rupture de moitié au niveau des perçages de palier, pour permettre un montage démontable, ajusté.

10. Boîtier de fonte selon l'une des revendications 1 à 9,
caractérisé en ce que
les joints de séparation (11, 11') entre la partie de boîtier (2") et le châssis de palier (9), sont réalisés par enlèvement de copeaux à une mesure définitive correspondant à la hauteur respective des couches intermédiaires (13).

11. Boîtier de fonte selon l'une des revendications 1 à 9,
caractérisé en ce que
les joints de séparation (11, 11') entre la partie de boîtier (2") et le châssis de palier (9), sont réalisés à la coulée avec des couches intermédiaires (13) ayant des noyaux en verre de dimensions précises.
